# EUROPÄISCHE PATENTSCHRIFT

(11) **EP 2 306 879 B1**
(45) Veröffentlichungstag und Bekanntmachung des Hinweises auf die Patenterteilung: **27.05.2020**
(21) Anmeldenummer: 09769346.9
(22) Anmeldetag: 26.06.2009
(51) Int. Cl.: A47L 15/00, A47L 15/42

(54) **VERFAHREN ZUM BETREIBEN EINES WASSERFÜHRENDEN HAUSHALTSGERÄTS**
METHOD FOR OPERATING A WATER-CONDUCTING DOMESTIC APPLIANCE
PROCÉDÉ PERMETTANT DE FAIRE FONCTIONNER UN APPAREIL MÉNAGER À CIRCULATION D'EAU

(30) Priorität: 27.06.2008 DE 102008030538
(43) Veröffentlichungstag der Anmeldung: 13.04.2011
(73) Patentinhaber: BSH Hausgeräte GmbH, 81739 München (DE)
(72) Erfinder: HEISELE, Bernd, 89567 Sontheim (DE); RIEGER, Roland, 73492 Rainau (DE); ROSENBAUER, Michael, 86756 Reimlingen (DE)
(86) Internationale Anmeldenummer: PCT/EP2009/058023
(87) Internationale Veröffentlichungsnummer: WO 2009/156498

(56) Entgegenhaltungen:
- EP-A- 0 800 785
- WO-A-2004/054426
- WO-A-2006/053634
- DE-A1- 2 730 489
- DE-A1- 3 609 277
- DE-A1- 3 900 617
- GB-A- 2 271 417

## Beschreibung

Die Erfindung betrifft ein Verfahren zum Betreiben eines wasserführenden Haushaltsgeräts.

Aus der DE 27 30 489 ist eine Haushaltsgeschirrspülmaschine bekannt, bei der zur Reinigung von zu reinigendem Spülgut ein eine Mehrzahl von Programmschritten aufweisendes Spülprogramm durchgeführt wird, das wenigstens zwei Teilprogrammschritte aufweist, während denen Spülflotte, bspw. mit Reinigungsmitteln oder Klarspüler versetztes Wasser aufgeheizt wird, wobei die Spülmaschine wenigstens einen Spülbehälter zur Aufnahme von zu reinigendem Spülgut und einen in wärmeleitenden Kontakt mit dem Spülbehälter stehenden Flüssigkeitsspeicher aufweist. Dabei erlaubt es der in Wärmekontakt mit dem Spülbehälter stehende Flüssigkeitsspeicher Wasser bspw. vor seiner Verwendung in einem Spülschritt zu erwärmen. Dies kann durch eine Temperaturdifferenz zur Umgebung der Geschirrspülmaschine erfolgen und/oder durch Abwärme der im Behandlungsraum umgewälzten Spülflotte. Dadurch kann eine Energieeinsparung erreicht werden.

Aus EP 0 800 785 A2 ist eine Geschirrspülmaschine und ein Verfahren zum Betreiben einer Geschirrspülmaschine bekannt, das folgende Schritte aufweist: in einem Teilprogrammschritt wird eine erste Flüssigkeitsmenge aufgeheizt, die aufgeheizte erste Flüssigkeitsmenge wird wenigstens teilweise in wärmeleitenden Kontakt mit dem Inneren des Spülbehälters stehend im Inneren eines Flüssigkeitsspeichers gespeichert, in einem weiteren Teilprogrammschritt wird eine zweite Flüssigkeitsmenge aufgeheizt. Wird die Flüssigkeitsmenge im Flüssigkeitsspeicher nicht mehr benötigt, so wird der Flüssigkeitsspeicher entleert. Der Flüssigkeitsspeicher ist als Druckbehälter ausgeführt, der von der Pumpe der Geschirrspülmaschine geleert wird, wobei die Pumpe mit dem Sumpf der Geschirrspülmaschine verbunden ist.

Aus DE 39 00 617 A1 ist eine Geschirrspülmaschine und ein Verfahren zur Wärmerückgewinnung von aus einem Arbeitsbehälter abzuführendem erwärmtem Abwasser einer programmgesteuerten Haushalts-Geschirrspülmaschine bekannt. Dabei wird Frischwasser in einen Arbeitsbehälter der Geschirrspülmaschine eingelassen. Das Abwasser wird zwischengespeichert und dann mit danach zulaufendem Frischwasser in Wärmeaustausch gebracht, wenn das Frischwasser programmgemäß zu erwärmen ist. Zur Speicherung des Abwassers ist ein Zwischenspeichergefäß vorgesehen, das in thermischem Kontakt mit dem Arbeitsbehälter steht. Wird unter gegebenen Voraussetzungen keine so weit gehende Entwärmung des Abwassers im Zwischenspeichergefäß erreicht, dass seine Temperatur am Ende des Frischwasserzulaufs gleich oder niedriger als die durch den Wärmeaustausch im Arbeitsbehälter befindliche Frischwassermenge ist, dann kann durch weiteres Verweilen des Abwassers im Zwischenspeichergefäß bei eingeschalteter Umwälzpumpe durch Besprühen auf der Wandung des Arbeitsbehältnis im Bereich des damit der Wärmekopplung stehenden Zwischenspeichergefäßes eine weitere Entwärmung des Abwassers erfolgen. Erst nach zumindest weitgehendem Temperaturausgleich braucht dann das Abwasser abgepumpt zu werden, wenn es nicht in seiner Temperatur noch so hoch ist, dass sein Wärmeinhalt für spätere Spülgänge gemessen werden kann.

Aufgabe der Erfindung, ist es ein verbessertes Verfahren anzugeben, mit dem der Energieverbrauch weiter reduziert werden kann.

Das erfindungsgemäße Verfahren zum Betreiben einer Geschirrspülmaschine), insbesondere einer Haushalts-Geschirrspülmaschine, weist wenigstens die folgenden Schritte auf:
- in einem Teilprogrammschritt wird eine erste Flüssigkeitsmenge aufgeheizt,
- die aufgeheizte erste Flüssigkeitsmenge wird wenigstens teilweise in wärmeleitenden Kontakt mit dem Inneren eines Spülbehälters stehend im Inneren eines Flüssigkeitsspeichers gespeichert,
- in einem weiteren Teilprogrammschritt wird eine zweite Flüssigkeitsmenge aufgeheizt, und
- Entleeren des Flüssigkeitsspeichers, wenn ein Wärmeübergang vom dem Flüssigkeitsspeicher in das Innere des Spülbehälters im Wesentlichen zum Erliegen gekommen ist.

Somit erlaubt das erfindungsgemäße Verfahren die Nutzung von Wärmeenergie von Flüssigkeiten, insbesondere von aufgeheizten zurückzugewinnen, die sonst mit dem Abpumpen in ein hausseitiges Abwasserentsorgungssystem verloren geht. Durch das rechtzeitige Entleeren wird erreicht, dass keine unnötige Energie für das Aufheizen von der im Flüssigkeitsspeicher gespeicherten Flüssigkeit aufgewendet werden muss. Dabei wird von einem Erliegen des Wärmeübergangs von dem Flüssigkeitsspeicher in das Innere des Spülbehälters ausgegangen, wenn sich - ausgehend von einer niedrigeren Temperatur im Innern des Spülbehälters als im Flüssigkeitsspeicher - die Temperatur im Innern des Spülbehälters der Temperatur im Flüssigkeitsspeicher im Wesentlichen angenähert hat, bspw. auf einen Wert, der ± 5 bis 10 % von der Temperatur im Inneren des Spülbehälters abweicht.

Erfindungsgemäß ist vorgesehen, dass der Flüssigkeitsspeicher während des weiteren Teilprogrammschritts entleert wird. Hierbei wird das Entleeren des Flüssigkeitsspeichers als zum Teilprogrammschritt gehörend angesehen. Wenn jedoch die Flüssigkeit während des weiteren Teilprogrammschritts nur geringfügig erwärmt wird, kann nach Abschluss des weiteren Teilprogrammschritts die Temperatur im Flüssigkeitsspeicher höher sein als im Inneren des Spülbehälters.

Es ist vorzugsweise vorgesehen, dass der Flüssigkeitsspeicher während einer Heizphase des weiteren Teilprogrammschritts entleert wird. D.h., während eines Teilprogrammschritts, in dem umgewälzte Flüssigkeit, wie z.B. mit Reinigungsmitteln versetze Spülflotte, sogenannte Spülflotte, kontinuierlich erwärmt wird, erfolgt eine Entleerung des Flüssigkeitsspeichers.

Zur Erfassung des Wärmeübergangs zwischen Flüssigkeitsspeicher und dem Inneren des Spülbehälters ist vorzugsweise vorgesehen, dass wenigstens während des weiteren Programmschritts, insbesondere bei gefülltem Flüssigkeitsspeicher, die Temperaturdifferenz zwischen Spülbehälter und Flüssigkeitsspeicher erfasst wird. Dabei wird davon ausgegangen, bei sich im Wesentlichen angeglichenen Temperaturen kein Wärmeübergang mehr erfolgt.

Hierzu sind vorzugsweise ein Temperatursensor zur Erfassung der Spülbehältertemperatur und ein Temperatursensor zur Erfassung Flüssigkeitsspeichertemperatur vorgesehen. Es können jedoch auch andere Vorrichtungen oder Verfahren zur Erfassung der Temperaturdifferenz Verwendung finden.

Vorzugsweise umfassen die Teilprogrammschritte wenigstens einen Reinigungsschritt und einen Klarspülschritt ist, wobei während beider Teilprogrammschritte jeweils Flüssigkeiten aufgeheizt werden. Dabei wird während des Reinigungsschritte Reinigungsmittel zugegeben und die umgewälzte Flüssigkeit bzw. Spülflotte auf bspw. bis 65°C aufgeheizt. In dem Klarspülschritt hingegen werden Entspannungsmittel zugegeben, die insbesondere einen fleckfreien Trocknungsprozess des Spülgutes gewährleisten sollen, wobei in diesem Schritt Temperaturen von bspw. 70°C erreicht werden.

Ferner kann vorzugsweise vorgesehen sein, dass zwischen den beiden Teilprogrammschritten wenigstens ein dritter Teilprogrammschritt ohne Erwärmung von Flüssigkeit vorgesehen ist. Es kann sich hierbei vorzugsweise um einen Zwischenspülschritt handeln, der dazu dient, im Spülbehälter und dem Pumpensystem der Geschirrspülmaschine verbleibende Reste von mit Reinigungsmitteln versetzter Flüssigkeit bzw. Spülflotte zu entfernen, um so sicherzustellen, dass sich Reinigungsmittelreste und im Klarspülschritt zugegeben Entspannungsmittel nicht gegenseitig in ihrer Wirkung negativ beeinflussen.

Schließlich kann vorzugsweise vorgesehen sein, dass vor einem Teilprogrammschritt, während dem Flüssigkeit aufgeheizt wird, ein oder mehrere Vorspülschritte ohne Aufheizen von Flüssigkeit vorgesehen ist, bei dem in dem Flüssigkeitsspeicher gespeicherte Flüssigkeit verwendet wird. Das Vorspülen dient dazu, grobe Anschmutzungen von zu reinigendem Spülgut zu entfernen.

Ferner gehört zur Erfindung eine Geschirrspülmaschine, die zur Durchführung des erfindungsgemäßen Verfahrens ausbildet ist. Sie weist wenigstens einen Spülbehälter zur Aufnahme von zu reinigendem Spülgut und ein in wärmeleitenden Kontakt mit dem Spülbehälter stehenden Flüssigkeitsspeicher auf. Dabei kann nach Beendung eines Teilprogrammschritts Flüssigkeit bzw. Spülflotte mittels einer Laugenpumpe und entsprechenden Leitung aus dem Spülbehälter in ein hausseitiges Abwasserentsorgungssystem geleitet werden. Erfindungsgemäß ist vorgesehen, dass Entleerungsmittel vorgesehen sind zum unabhängigen Entleeren des Flüssigkeitsspeichers vom Spülbehälter. Somit bilden die Entleerungsmittel, bspw. in Form einer Entleerungsleitung, die eine flüssigkeitsleitende Verbindung von dem Flüssigkeitsspeicher mit einem hausseitigen Abwasserentsorgungssystem herstellen, eine Bypassleitung, die eine Entleerung des Flüssigkeitsspeichers erlaubt, ohne das im Flüssigkeitsspeicher gespeicherte Flüssigkeit bzw. Spülflotte zum Entleeren durch den Spülbehälter geführt werden muss. Dies erlaubt es, den Flüssigkeitsspeicher auch dann zu Entleeren, wenn zugleich in dem Spülbehälter während eines Teilprogrammschritts Flüssigkeit bzw. Spülflotte umgewälzt wird.

Im Folgenden wird die Erfindung anhand einer Zeichnung erläutert.

Es zeigt:

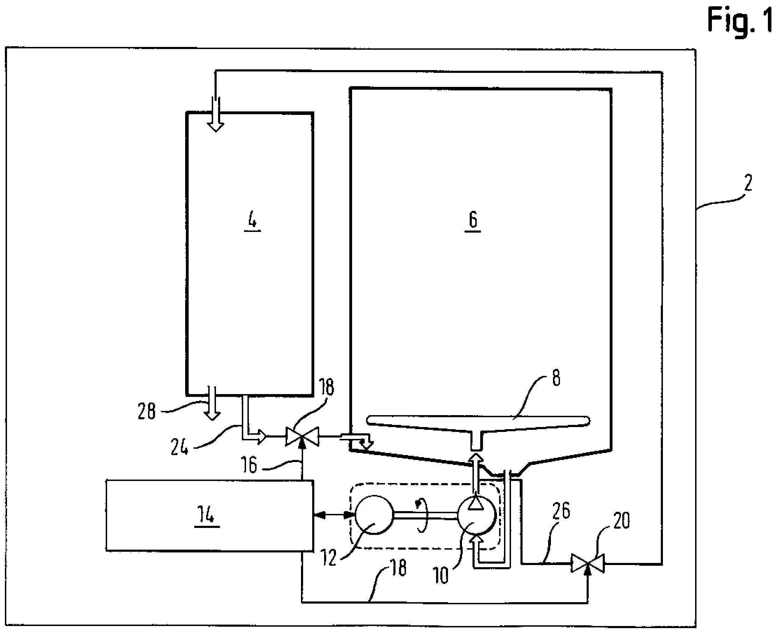

- Fig. 1: eine schematische Darstellung einer Geschirrspülmaschine zur Durchführung des erfindungsgemäßen Verfahrens.

Die Geschirrspülmaschine 2 weist einen Spülbehälter 6 zur Aufnahme von zu reinigendem Spülgut (nicht dargestellt) auf, das beispielsweise in ausziehbar gelagerten Geschirrkörben (nicht dargestellt) platziert werden kann. Zur Beaufschlagung des zu reinigenden Spülgutes mit Flüssigkeit bzw. Spülflotte, d. h. mit Reinigungsmitteln oder Klarspüler versetztem Wassers, ist im vorliegenden Ausführungsbeispiel ein Sprüharm 8 im Spülbehälter vorgesehen. Es kann jedoch eine Mehrzahl von Sprüharmen vorgesehen sein. Zur Versorgung des Sprüharms 8 mit Spülflotte ist eine Umwälzpumpe 10 vorgesehen, die flüssigkeitsleitend mit einem im Bodenbereich des Spülbehälters 6 angeordnetem Sumpf steht, in dem sich die von dem zu reinigenden Spülgut herabtropfende Spülflotte sammelt. Zum Antrieb der Umwälzpumpe 10 ist ein Motor 12 vorgesehen, der mit einer Steuereinrichtung 14 der Geschirrspülmaschine 2 in Verbindung steht. Zum Aufheizen der umgewälzten Spülflotte kann ein Heizelement (nicht dargestellt) vorgesehen sein.

In wärmeleitenden Kontakt mit dem Spülbehälter 6 ist ein Flüssigkeitsspeicher 4 vorgesehen, in dem eine Flüssigkeitsmenge zwischengespeichert werden kann. Zum Entleeren des Flüssigkeitsspeichers 4 in den Spülbehälter 6 ist eine Entleerungsleitung 24 vorgesehen, die mittels eines Entleerungsventils 18 geöffnet und geschlossen werden kann, wobei das Entleerungsventil 18 über eine Steuerleitung 16 mit der Steuereinrichtung 14 in Verbindung steht. Ferner ist eine Entsorgungsleitung 28 vorgesehen, die eine Entleerung des Flüssigkeitsspeichers 4 erlauben, ohne das Flüssigkeit bzw. Spülflotte durch den Spülbehälter 6 geleitet werden muss, in ein hausseitiges Abwasserentsorgungssystem zu leiten. Zum Öffnen und Schließen der Entsorgungsleitung 28 ist ein von der Steuereinrichtung 14 ansteuerbaren Ventil (nicht dargestellt) vorgesehen.

Schließlich ist eine Rückführleitung 26 vorgesehen, mit der es möglich ist, Spülflotte aus dem Spülbehälter 6 in den Flüssigkeitsspeicher 4 zurückzufördern. Zum Öffnen und Schließen der Rückführleitung 26 ist ein Rückführventil 20 vorgesehen, das ebenfalls über eine Steuerleitung 18 mit der Steuereinrichtung 14 verbunden ist. Zusätzlich können weitere Ventile vorgesehen sein, um die Zuleitung zu dem Sprüharm 8 in dem Spülbehälter 6 zu blockieren, wenn mittels der Umwälzpumpe 10 Spülflotte durch die Rückführleitung 26 in den Flüssigkeitsspeicher 4 gefördert werden soll. Ferner kann an Stelle einzelner Ventile ein als Wasserweiche ausgebildetes Mehrwegeventil Verwendung finden, das bspw. eine motorisch verstellbare Scheibe aufweist.

Zur Reinigung von Spülgut wird ein mehrere Programmschritte umfassendes Reinigungsprogramm durchlaufen, das beispielsweise die Programmschritte Vorspülen, Reinigen, Zwischenspülschritt und Klarspülen sowie Trocknen umfassen kann. Dabei wird Wasser oder Spülflotte, d.h. mit Reinigungsmitteln oder Klarspüler versetztes Wasser während wenigstens zweier dieser Programmschritte erwärmt, bspw. während des Reinigens und dem Klarspülschritt. Es findet ein Spülflottenwechsel der umgewälzten Spülflotte zwischen den Teilprogrammschritten statt, d.h., es wird nach Beendigung eines Teilprogrammschritts die Geschirrspülmaschine erneut mit Flüssigkeit bzw. Wasser befüllt.

Ein Vorspülschritt kann beispielsweise durchgeführt werden, nachdem durch Leitungsmittel (nicht dargestellt) eine Flüssigkeitsmenge in den Spülbehälter 6 eingeströmt ist. Anschließend wird die Flüssigkeitsmenge von der Umwälzpumpe 10 nach entsprechender Ansteuerung des Motors 12 durch die Steuereinrichtung 14 umgewälzt und dem Sprüharm 8 zugeführt.

Nach Beendigung des Vorspülgangs wird die erste Flüssigkeitsmenge nach Öffnen des Rückführventils 20 durch die Rückführleitung 26 in den Flüssigkeitsspeicher 4 geleitet, wobei ein geschlossenes Entleerungsventil 18 verhindert, dass der Spülbehälter 4 sich erneut entleert.

Anschließend wird für den Reinigungsschritt über nicht dargestellte Leitungsmittel der Spülbehälter 6 mit einer Flüssigkeitsmenge gefüllt und anschließend die Flüssigkeitsmenge mittels der Umwälzpumpe 10 umgewälzt und gleichzeitig erwärmt. Dabei unterstützt die Raumtemperatur aufweisende Flüssigkeit im Flüssigkeitsspeicher 4, die somit üblicherweise eine höhere Temperatur aufweist als die aus dem hausseitigen Wasserversorgungsnetz entnommene Flüssigkeit, das Aufheizen der umgewälzten Flüssigkeitsmenge.

Sobald die Temperatur der im Flüssigkeitsspeicher 4 befindlichen Flüssigkeitsmenge gleich der Temperatur der im Spülbehälter 6 umgewälzten Flüssigkeitsmenge wird die Entleerungsleitung 28 geöffnet und der Flüssigkeitsspeicher 4 entleert. Zur Erfassung dieser beiden Temperaturen können entsprechende Temperatursensoren (nicht dargestellt) vorgesehen sein. Anschließend wird die im Spülbehälter 6 umgewälzte zweite Flüssigkeitsmenge weiter aufgeheizt.

Nach Beendigung des Reinigungsschritts kann durch Öffnen der Rückführleitung 26 durch Betätigen des Rückführventils 20 die Flüssigkeitsmenge aus dem Spülbehälter 6 in den Flüssigkeitsspeicher 4 gefördert werden.

In einem Zwischenspülschritt wird der Spülbehälter 6 erneut mit einer Flüssigkeitsmenge gefüllt und anschließend die Flüssigkeit mit der Umwälzpumpe umgewälzt, ohne dass sie aufgeheizt wird. Eine Erwärmung erfolgt alleine durch den Wärmeübergang von dem Flüssigkeitsspeicher 4 ins Innere des Spülbehälters 6, da die im Flüssigkeitsspeicher 6 gespeicherte Flüssigkeit eine höhere Temperatur hat als im Inneren des Spülbehälters 6 herrscht. Sobald festgestellt wird, dass sich die beiden Temperaturen angenährt haben oder wenigstens gleich sind, wird der Flüssigkeitsspeicher 6 entleert.

Es kann sein, dass die Temperatur im Flüssigkeitsspeicher 4 nach Beendigung des Zwischenspülens höher ist als im Inneren des Spülbehälters 6.

Anschließend wird in einem letzten Schritt erneut der Spülbehälter 6 zur Durchführung eines Klarspülschritts mit einer Flüssigkeitsmenge gefüllt und anschließend die Flüssigkeit 6 mit der Umwälzpumpe umgewälzt, während sie weiter aufgeheizt wird. Dieser Vorgang wird wieder durch die Abwärme der noch warmen in dem Flüssigkeitsspeicher 4 gespeicherten Flüssigkeitsmenge aus dem Reinigungsschritt unterstützt. Sobald festgestellt wird, dass sich die beiden Temperaturen angenährt haben oder wenigstens gleich sind, wird der Flüssigkeitsspeicher 6 entleert

Nach Beendigung des Klarspülschritts kann sowohl der Spülbehälter 6 als auch der Flüssigkeitsspeicher 4 durch nicht dargestellte Leitungsmittel entleert werden, die es erlauben, Flüssigkeit in ein haushaltiges Abwasserentsorgungssystems zu leiten.

Es kann auch vorgesehen sein, lediglich den Inhalt des Flüssigkeitsspeichers 4 in das haushaltige Abwasserentsorgungssystem zu leiten, während die im Spülbehälter 6 befindliche Flüssigkeitsmenge, d. h. mit Entspannungsmittel bzw. Klarspüler versetztes Wasser, anschließend in den leeren Flüssigkeitsspeicher 4 durch die Rückführleitung 26 geleitet wird.

Bei einem erneuten Programmstart kann die im Flüssigkeitsspeicher 4 zwischengelagerte Flüssigkeitsmenge durch Öffnen des Entleerungsventils in den Spülbehälter 6 geleitet und zur Durchführung eines Vorspülschritts verwendet werden.

Abweichend von dem beschriebenen Programmablauf kann mit dem erfindungsgemäßen Verfahren auch eine Energieersparnis bei Abwandlungen des Programmablaufs erreicht werden, bei denen auch während des Zwischenspül- und/oder Vorspülschritts ein Aufheizen der Flüssigkeit bzw. Spülflotte vorgesehen ist, oder bei denen der Zwischenspül- und/oder Vorspülschritt ausgeblendet sind.

## Patentansprüche

1. Verfahren zum Betreiben einer Geschirrspülmaschine (2), insbesondere einer Haushalts-Geschirrspülmaschine, wenigstens aufweisend die folgenden Schritte:
- in einem Teilprogrammschritt wird eine erste Flüssigkeitsmenge aufgeheizt,
- die aufgeheizte erste Flüssigkeitsmenge wird wenigstens teilweise in wärmeleitenden Kontakt mit dem Inneren eines Spülbehälters (6) stehend im Inneren eines Flüssigkeitsspeichers (4) gespeichert,
- in einem weiteren Teilprogrammschritt wird eine zweite Flüssigkeitsmenge aufgeheizt, und
- Entleeren des Flüssigkeitsspeichers (4), wenn ein Wärmeübergang von dem Flüssigkeitsspeicher (4) in das Innere des Spülbehälters (6) im Wesentlichen zum Erliegen gekommen ist, **dadurch gekennzeichnet, dass** der Flüssigkeitsspeicher (4) während des weiteren Teilprogrammschritts entleert wird.

2. Verfahren nach Anspruch 1, **dadurch gekennzeichnet, dass** der Flüssigkeitsspeicher (4) während einer Heizphase des weiteren Teilprogrammschritts entleert wird.

3. Verfahren nach Anspruch 1 oder 2, **dadurch gekennzeichnet, dass** wenigstens während des weiteren Programmschritts, insbesondere bei gefüllten Flüssigkeitsspeicher (6), die Temperaturdifferenz zwischen Spülbehälter (6) und Flüssigkeitsspeicher (4) erfasst wird.

4. Verfahren nach Anspruch 3, **dadurch gekennzeichnet, dass** die Temperaturdifferenz durch einen Temperatursensor zur Erfassung der Spülbehältertemperatur und einen Temperatursensor zur Erfassung Flüssigkeitsspeichertemperatur erfasst wird.

5. Verfahren nach einem der Ansprüche 1 bis 4, **dadurch gekennzeichnet, dass** der erste Teilprogrammschritt ein Reinigungsschritt und der zweite Teilprogrammschritt ein Klarspülschritt ist.

6. Verfahren nach einem der Ansprüche 1 bis 5, **dadurch gekennzeichnet, dass** zwischen den beiden Teilprogrammschritten wenigstens ein dritter Teilprogrammschritt ohne Erwärmung von Flüssigkeit vorgesehen ist.

7. Verfahren nach einem der Ansprüche 1 bis 6, **dadurch gekennzeichnet, dass** der dritte Teilprogrammschritt ein Zwischenspülschritt ist.

8. Verfahren nach einem der Ansprüche 1 bis 7, **dadurch gekennzeichnet, dass** vor einem Teilprogrammschritt ein Vorspülschritt ohne Aufheizen von Flüssigkeit vorgesehen ist, bei dem in dem Flüssigkeitsspeicher (4) gespeicherte Flüssigkeit verwendet wird.

9. Geschirrspülmaschine, ausgebildet zur Durchführung eines Verfahrens nach einem der Ansprüche 1 bis 8, wenigstens aufweisend einen Spülbehälter (6) zur Aufnahme von zu reinigendem Spülgut und ein in wärmeleitenden Kontakt mit dem Spülbehälter (6) stehenden Flüssigkeitsspeicher (4), wobei Entleerungsmittel (28) vorgesehen sind zum unabhängigen Entleeren des Flüssigkeitsspeicher (4) vom Spülbehälter (6), wobei die Geschirrspülmaschine ausgebildet ist, um folgende Schritte durchzuführen:
- in einem Teilprogrammschritt wird eine erste Flüssigkeitsmenge aufgeheizt,
- die aufgeheizte erste Flüssigkeitsmenge wird wenigstens teilweise in wärmeleitenden Kontakt mit dem Inneren eines Spülbehälters (6) stehend im Inneren eines Flüssigkeitsspeichers (4) gespeichert,
- in einem weiteren Teilprogrammschritt wird eine zweite Flüssigkeitsmenge aufgeheizt, und
- Entleeren des Flüssigkeitsspeichers (4), wenn ein Wärmeübergang von dem Flüssigkeitsspeicher (4) in das Innere des Spülbehälters (6) im Wesentlichen zum Erliegen gekommen ist, wobei der Flüssigkeitsspeicher (4) während des weiteren Teilprogrammschritts entleert wird.

## Claims

1. Method for operation of a dishwasher (2), in particular a household dishwasher, at least having the following steps:
- a first amount of liquid is heated in a partial program step,
- the heated first amount of liquid is at least partially stored in heat-conducting contact with the interior of a tub (6), in the interior of a liquid reservoir (4),
- in a further partial program step a second amount of liquid is heated, and
- emptying of the liquid reservoir (4), when a heat transition from the liquid reservoir (4) to the interior of the tub (6) has essentially ceased,
**characterised in that** the liquid reservoir (4) is emptied during the further partial program step.

2. Method according to claim 1, **characterised in that** the liquid reservoir (4) is emptied during a heating phase of the further partial program step.

3. Method according to claim 1 or 2, **characterised in that** at least during the further program step, in particular in the case of a filled liquid reservoir (6), the temperature difference between tub (6) and liquid reservoir (4) is determined.

4. Method according to claim 3, **characterised in that** the temperature difference is determined by means of a temperature sensor for determining the tub temperature and a temperature sensor for determining the liquid reservoir temperature.

5. Method according to one of claims 1 to 4, **characterised in that** the first partial program step is a cleaning step and the second partial program step is a rinsing step.

6. Method according to one of claims 1 to 5, **characterised in that** at least a third partial program step without the heating of liquid is provided between the two partial program steps.

7. Method according to one of claims 1 to 6, **characterised in that** the third partial program step is an intermediate rinse step.

8. Method according to one of claims 1 to 7, **characterised in that** before a partial program step a pre-rinse step without the heating of liquid is provided, in which liquid stored in the liquid reservoir (4) is used.

9. Dishwasher, embodied for the execution of a method according to one of claims 1 to 8, at least having a tub (6) for accommodating items to be washed and a liquid reservoir (4) in heat-conducting contact with the tub (6), wherein drainage means (28) are provided, for the independent emptying of the liquid reservoir (4) of the tub (6), wherein the dishwasher is embodied to carry out the following steps:
- a first amount of liquid is heated in a partial program step,
- the heated first amount of liquid is at least partially stored in heat-conducting contact with the interior of a tub (6), in the interior of a liquid reservoir (4),
- in a further partial program step a second amount of liquid is heated, and
- emptying of the liquid reservoir (4), when a heat transition from the liquid reservoir (4) to the interior of the tub (6) has essentially ceased, wherein the liquid reservoir (4) is emptied during the further partial program step.

## Revendications

1. Procédé d'exploitation d'un lave-vaisselle (2), en particulier d'un lave-vaisselle ménager, présentant au moins les étapes suivantes :
- une première quantité de fluide est chauffée dans une étape de programme partielle,
- la première quantité de fluide chauffée est stockée au moins partiellement en contact thermoconducteur avec l'intérieur d'une cuve de lavage (6) se trouvant à l'intérieur d'un réservoir de fluide (4),
- une deuxième quantité de fluide est chauffée dans une étape de programme partielle supplémentaire, et
- vidange du réservoir de fluide (4) lorsqu'un transfert de chaleur du réservoir de fluide (4) vers l'intérieur de la cuve de lavage (6) s'est essentiellement arrêté, **caractérisé en ce que** le réservoir de fluide (4) est vidangé durant l'étape de programme partielle supplémentaire.

2. Procédé selon la revendication 1, **caractérisé en ce que** le réservoir de fluide (4) est vidangé durant une phase de chauffe de l'étape de programme partielle supplémentaire.

3. Procédé selon la revendication 1 ou 2, **caractérisé en ce que** la différence de température entre la cuve de lavage (6) et le réservoir de fluide (4) est au moins saisie durant l'étape de programme partielle supplémentaire, en particulier en présence d'un réservoir de fluide (6) rempli. RLT -AVISER CLIENT - devrait être réservoir de fluide (4)

4. Procédé selon la revendication 3, **caractérisé en ce que** la différence de température est saisie par un capteur de température pour la saisie de la température de la cuve de lavage et un capteur de température pour la saisie de la température du fluide.

5. Procédé selon l'une des revendications 1 à 4, **caractérisé en ce que** la première étape de programme partielle est une étape de lavage et la deuxième étape de programme partielle une étape de rinçage.

6. Procédé selon l'une des revendications 1 à 5, **caractérisé en ce qu'**au moins une troisième étape de programme partielle sans chauffage de fluide est prévue entre les deux étapes de programme partielles.

7. Procédé selon l'une des revendications 1 à 6, **caractérisé en ce que** la troisième étape de programme partielle est une étape de lavage intermédiaire.

8. Procédé selon l'une des revendications 1 à 7, **caractérisé en ce qu'**une étape de prélavage sans chauffage de fluide utilisant le fluide stocké dans le réservoir de fluide (4) est prévue avant une étape de programme partielle.

9. Lave-vaisselle formé pour l'exécution d'un procédé selon l'une des revendications 1 à 8, présentant au moins une cuve de lavage (6) pour l'accueil de vaisselle à laver et un réservoir de fluide (4) en contact thermoconducteur avec la cuve de lavage (6), dans lequel des moyens de vidange (28) sont prévus pour la vidange indépendante du réservoir de fluide (4) par rapport à la cuve de lavage (6), dans lequel le lave-vaisselle est formé afin d'exécuter les étapes suivantes :
- une première quantité de fluide est chauffée dans une étape de programme partielle, la première quantité de fluide chauffée est stockée au moins partiellement en contact thermoconducteur avec l'intérieur d'une cuve de lavage (6) se trouvant à l'intérieur d'un réservoir de fluide (4),
- une deuxième quantité de fluide est chauffée dans une étape de programme partielle supplémentaire, et
- vidange du réservoir de fluide (4) lorsqu'un transfert de chaleur du réservoir de fluide (4) vers l'intérieur de la cuve de lavage (6) s'est essentiellement arrêté, dans lequel le réservoir de fluide (4) est vidangé durant l'étape de programme partielle supplémentaire.
